# FASCICULE DE BREVET EUROPEEN

(11) **EP 0 785 841 B1**
(45) Date de publication et mention de la délivrance du brevet: **14.04.1999**
(21) Numéro de dépôt: 95934190.0
(22) Date de dépôt: 09.10.1995
(51) Int. Cl.: B25B 5/06

(54) **PROCEDE ET DISPOSITIF DE MAINTIEN ET DE POSITIONNEMENT PRECIS DE PIECES MECANIQUES**
VERFAHREN UND VORRICHTUNG ZUM HALTEN UND GENAUEN AUSRICHTEN VON MECHANISCHEN WERKSTÜCKEN
METHOD AND DEVICE FOR ACCURATELY SUPPORTING AND POSITIONING MECHANICAL PARTS

(30) Priorité: 14.10.1994 FR 9412565
(43) Date de publication de la demande: 30.07.1997
(73) Titulaire: Ferriere, Christian, 30100 Ales (FR)
(72) Inventeur: Ferriere, Christian, 30100 Ales (FR)
(74) Mandataire: Somnier, Jean-Louis
(86) Numéro de dépôt international: FR9501315
(87) Numéro de publication internationale: WO9611773

(56) Documents cités:
- EP-A- 0 474 397
- DD-A- 288 785
- DE-A- 1 502 951
- DE-A- 2 328 296
- DE-A- 3 800 696
- DE-A- 3 909 630
- DE-A- 3 938 150
- FR-A- 2 439 157
- FR-A- 2 568 161
- US-A- 5 090 758

## Description

La présente invention a pour objet un procédé et dispositif de maintien et de positionnement précis de pièces mécaniques selon les prèambules des revendications 1 et 2.

Le secteur technique de l'invention est la réalisation d'outillage de préhension de pièces comportant au moins un alésage ou un axe cylindrique.

Une des applications principales de l'invention est le contrôle dimensionnel de pièces de petites dimensions et de forme complexe, telles que par exemple celles rentrant dans la fabrication de disjoncteurs électriques. Ces pièces sont livrées en effet en grande quantité et par lots : pour pouvoir en assurer le contrôle de dimensionnement, un prélèvement de vingt ou trente pièces est alors effectué dans chaque lot et certaines caractéristiques dimensionnelles de celles-ci sont contrôlées sur machine à mesurer et tridimensionnelle.

Cette opération de contrôle nécessite de localiser avec précision, soit à moins de 0,01 millimètres, les pièces par rapport à un référentiel de la machine, mais également de maintenir celles-ci pour assurer l'acquisition fiable des points de mesure. Il est donc nécessaire d'assurer la localisation et le maintien simultané de plusieurs pièces, afin d'effectuer la campagne de mesure sans intervention de l'opérateur. Les pièces concernées présentent des formes complexes mais possèdent toutes un alésage de référence de 2 à 5 millimètres de diamètre.

Or, les diverses techniques de localisation et de maintien des pièces n'ont que très peu évolué dans l'industrie, que ce soit dans les applications d'usinage, d'assemblage ou de contrôle. Parallèlement à ces techniques, l'utilisation des méthodes de cotation normalisée a mis en évidence l'utilité de surfaces de référence simples pour définir dimensionnellement une pièce mécanique. A tous les stades de l'évolution d'un produit, depuis l'étude, puis la fabrication, le contrôle, et jusqu'à l'assemblage, les surfaces de référence apparaissent comme fondamentales dans la qualité de celui-ci. Divers systèmes de préhension permettent à ce jour de localiser et de maintenir des pièces mécaniques, cependant lorsque les surfaces de référence sont de type cylindrique (axe ou alésage) ces dispositifs sont complexes (pinces de préhension pour axe plein) et coûteux, ou inadaptés (axe de guidage lisse ou avec rainures) lorsqu'il faut également assurer le maintien de la pièce. De plus, les dispositifs de localisation dans un alésage introduisent un jeu fonctionnel oui est souvent incompatible avec la précision de positionnement requise.

Divers équipements spécifiques ont été développés pour différents types de pièces particulières à maintenir, et dont certains ont fait l'objet de demandes de brevets. On peut citer par exemple :
- le brevet DE 3938150 sur un dispositif de localisation précise pour l'usinage ou la rectification de pièces en forme de disque comportant une ou plusieurs rainures radiales, avec ou sans trou central, et des doigts de positionnement ;
- le brevet DD 288785 décrivant un élément de positionnement et de maintien pour pièces plates munies d'orifices et destinées à être usinées, ledit élément ayant une forme cylindrique se logeant d'un côté dans l'orifice de la pièce et de l'autre côté dans un trou du bâti et fabriqué en élastomère de rigidité suffisante ;
- le brevet EP 0474397 enseignant un dispositif de fixation de pièces sur une embase ayant une partie en saillie, et un trou grâce à un élément rotatif insérable dans ce trou et un mécanisme de dilatation interne bloquant le dispositif dans le trou suivant la position voulue de blocage de la pièce ;
- le brevet DE 3909630 representant l'état de la technique le plus proche décrit un outil de serrage par adhérence comportant un élément expansible en alliage à mémoire de forme et à forte élasticité permettant une extensibilité plus grande qu'avec de l'acier, lors de sa mise en pression interne, à la température voulue pour obtenir son maximum d'expansion, afin qu'il vienne se bloquer à l'intérieur d'un alésage de la pièce à immobiliser cependant, malgré cela et la possibilité de rajouter une enveloppe cylindrique externe rainurée pour l'adapter à différents diamètres d'alésage, cet outil ne permet pas de rattraper des défauts de cet alésage, nécessite une mise en oeuvre avec un contrôle de la température et peut même déformer la pièce à immobiliser.

On pourrait citer de nombreux autres brevets portant sur divers systèmes de centrage et de positionnement de pièces mais on relève dans tous ces dispositifs existants que les dimensions, la diversité et la complexité des pièces nécessitent de réaliser des outillages de préhension spéciaux, ce qui représente un coût d'étude et de réalisation incompatible avec le coût de base de la pièce concernée, surtout quand celle-ci fait partie de lots fabriqués en grande série comme dans l'application citée précédemment. Que ce soit dans des systèmes complexes ou dans des systèmes simples nécessitant alors de multiples points d'appui et d'ancrage sur la pièce à maintenir, on constate également que les fonctions de localisation et de maintien ne sont pas toujours réalisées parfaitement et engendrent des problèmes de qualité du contrôle.

Dans le domaine particulier du contrôle de pièces de petites dimensions sur machines à mesurer tridimensionnelles, de nombreux problèmes sont ainsi à ce jour restés sans solution. En effet, de manière générale, les points faibles des dispositifs existants sont tels que :
- ils offrent peu de possibilités d'adaptation et de flexibilité, nécessitant de multiplier le nombre d'outillages, soit au moins un par pièce ;
- leur coût de réalisation est assez élevé et leur temps de mise en oeuvre important ;
- il est très difficile de réaliser tous les contrôles dimensionnels d'une pièce sur un même outillage sans changer la position de ladite pièce en raison des difficultés d'accès au point de mesure, surtout quand plusieurs points d'ancrage sont nécessaires ;
- certains dispositifs existants ne respectent pas véritablement la géométrie de la pièce surtout quand le dispositif de maintien nécessite des efforts de serrage importants ;
- quand on prend un alésage comme point de référence de la mesure, on introduit des jeux rendant ladite mesure non fiable en raison des tolérances des pièces ;
- il est difficile et même parfois impossible d'industrialiser de tels dispositifs en raison de leur spécialisation et de leur complexité ;
   Le problème posé est donc de satisfaire aux inconvénients et points faibles relevés ci-dessus en réalisant un dispositif de maintien et de positionnement qui permette la localisation précise d'au moins une pièce comprenant au moins un alésage ou un axe cylindrique, ladite localisation et ledit maintien se faisant alors suivant la présente invention par rapport à celui-ci ; pour atteindre les objectifs de l'invention, le dispositif doit ainsi assurer ledit maintien en position par rapport à un plan de référence, quelle que soit la forme et le porte-à-faux du poids de la pièce et s'adapter à des variations de dimensions de celle-ci, être de mise en oeuvre rapide, permettre un accès direct et facile à tous les points de mesure voulus, respecter la géométrie de la pièce sans la déformer et être d'une réalisation simple et d'industrialisation ne nécessitant pas de spécialité spécifique, et d'un coût raisonnable pour permettre en particulier de réaliser des supports recevant plusieurs pièces à la fois.

Une solution au problème posé est un procédé et un dispositif de maintien et de positionnement suivant les première et deuxième revendications de la présente demande de brevet.

Quand ladite pièce mécanique à maintenir et à saisir comporte au moins un alésage, ladite tige de la broche est un doigt cylindrique creux fermé à son extrémité, et dont l'épaisseur de la paroi périphérique externe est mince au regard de son diamètre, de sa longueur et de l'épaisseur de l'extrémité ; l'embase cylindrique métallique est alors extérieure et entoure la tige de la broche.

Quand ladite pièce mécanique à maintenir et à positionner comporte au moins un arbre de section cylindrique, ladite tige de la broche suivant l'invention est un cylindre creux ouvert à son extrémité, formant alésage, et dont le volume cylindrique interne fermé est disposé en couronne autour de cet alésage, l'épaisseur de la membrane périphérique interne dudit cylindre étant mince ; de préférence en ce cas, le dispositif comporte un mandrin cylindrique rigide disposé extérieurement sur toute la longueur de ladite tige et s'encastrant à une de ses extrémités dans ledit orifice porté par la plaque de base support, et l'enveloppe métallique est intérieure et située dans ledit alésage de la tige.

Le résultat est de nouveaux procédés et dispositifs de maintien et de positionnement précis de pièces mécaniques, répondant au problème posé précédemment et permettant d'atteindre les objectifs rappelés ci-dessus, sachant que chacune desdites pièces doivent comporter au moins un alésage ou un arbre cylindrique à partir duquel s'effectue ledit maintien de la pièce considérée et son positionnement par rapport à la plaque de base support.

Le principe de ce dispositif est basé sur la déformation élastique d'une broche sous l'effet d'une pression hisotrope créée par un fluide visqueux sous pression.

Le dispositif selon la présente invention répond bien à l'objectif de positionnner avec précision des pièces quelconques présentant chacune un alésage ou un arbre de référence pour en effectuer le contrôle dimensionnel, ou pour toute intervention nécessitant un positionnement précis, tel que pour des manutentions automatiques, des opérations d'assemblage de précision, des changeurs rapides d'outils de coupe, des accouplements d'arbres pleins ou creux, etc...

En effet, le développement du dispositif suivant l'invention permet d'apporter une réponse économique à de nombreuses applications industrielles, en plus de celles citées en introduction pour le contrôle dimensionnel, telles que parmi certaines applications potentielles envisageables dans l'immédiat :
- pour les utilisateurs de machines à mesurer tridimensionnelles (dites MMT) : dispositif mono ou multibroches de localisation et de maintien pour des pièces présentant un alésage ou un axe de référence de diamètre 2 mm ; plus de 90 % des pièces mécaniques entrent dans cette catégorie ;
- pour les utilisateurs de robots de montage ou de fabrication : dispositif de préhension et de positionnement pour remplacer des pinces de robots lorsque les pièces à manipuler présentent un alésage ou un axe (90 % des cas) ;
- pour les assemblages aéronautiques : développement de broches expansibles autonomes, pour la localisation et le maintien des revêtements en tôle lors des opérations de contre-perçage des structures.

De plus, les procédés et dispositifs suivant l'invention présentent les avantages suivants :
- localisation par expansion concentrique radiale, soit externe du doigt de la broche, soit interne par retrécissement concentrique radial de son alésage, permettant de localiser avec précision une pièce mécanique en assurant également son maintien ;
- conservation de la perpendicularité de l'axe du doigt de la broche ou de son alésage par rapport au plan de référence formé par son support, lors de la mise en pression ;
- concentricité de la partie expansible du doigt de la broche ou de son alésage par rapport à son axe initial après mise en pression ;
- création d'un couple de maintien des pièces pour assurer un positionnement stable de celles-ci lors des interventions de fabrication ou de contrôle par la combinaison du coefficient de frottement de la surface des pièces avec celles du dispositif, et de la pression de contact due à l'expansion ;
- compensation des variations de diamètre de l'alésage ou de l'arbre des pièces dans la limite de déformation élastique du dispositif ;
- étanchéité des parois expansibles de la broche qui peut être en acétal, et fiabilité en raison de l'utilisation dans le domaine élastique de déformation ; Cette broche peut être réalisée par usinage : dans cette version l'enveloppe métallique est collée sur l'acétal ; ou par moulage, auquel cas l'enveloppe métallique est introduite dans le moule avant l'opération de moulage ce qui assure une parfaite liaison des deux matériaux ;
- géométrie de l'ensemble assurée par l'enveloppe métallique assurant l'interface pièce, qui permet d'obtenir de fortes pressions de contact avec la pièce à localiser sans déformation locale (rigidité de la liaison) et qui permet en raison de sa structure tubulaire de reprendre les efforts de torsion induits par les forces extérieures agissant sur la pièce, tout en permettant une expansion suffisante pour tenir compte des variations de diamètre des pièces (tolérance sur arbres et/ou alésages) grâce aux lumières ou rainures ou fentes longitudinales.

On pourrait citer d'autres avantages de la présente invention mais ceux cités ci-dessus en montrent déjà suffisamment pour en prouver la nouveauté et l'intérêt. La description et les Figures ci-après représentent un exemple de réalisation de l'invention mais n'ont aucun caractère limitatif : d'autres réalisations sont possibles dans le cadre de la portée et de l'étendue de cette invention, en particulier pour adapter des dispositifs de broches expansibles à diverses pièces mécaniques dont toute application où on veut assurer le maintien de celle-ci, et où on dispose d'une alimentation hydraulique, par rapport à une plaque de base pouvant recevoir une ou plusieurs pièces à la fois.

La Figure 1 est une vue en coupe d'un exemple de réalisation de la présente invention pour en particulier une machine à mesurer tridimensionnelle d'une petite pièce mécanique disposant au moins d'un alésage.

La Figure 2 est une vue en coupe d'un dispositif équivalent à celui de la Figure 1 mais avec un mode de réalisation différent permettant l'interchangeabilité et représenté avec une coiffe de protection.

Les Figures 3 et 4 représentent des vues en coupe de différentes réalisations de la partie expansible de la broche en forme de doigt et dont l'une avec un exemple d'enveloppe métallique externe.

Lesdites Figures représentent donc un exemple de réalisation pour maintenir et positionner une pièce mécanique 4 comportant au moins un alésage 5 ; mais dans d'autre modes de réalisation, tels que rappelés précédemment, le dispositif selon l'invention pourrait être adapté pour maintenir et positionner ladite pièce 4 comportant au moins un arbre de section cylindrique.

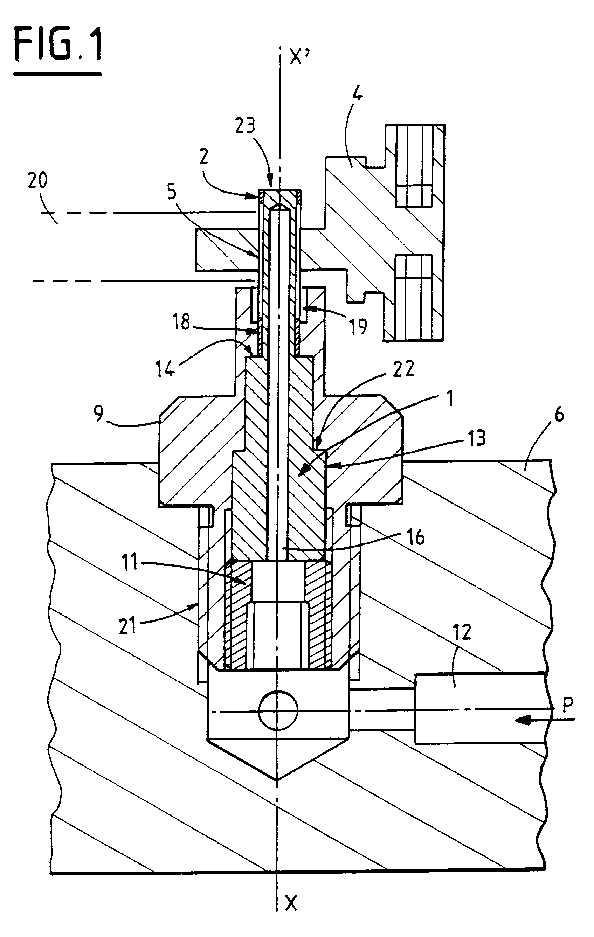

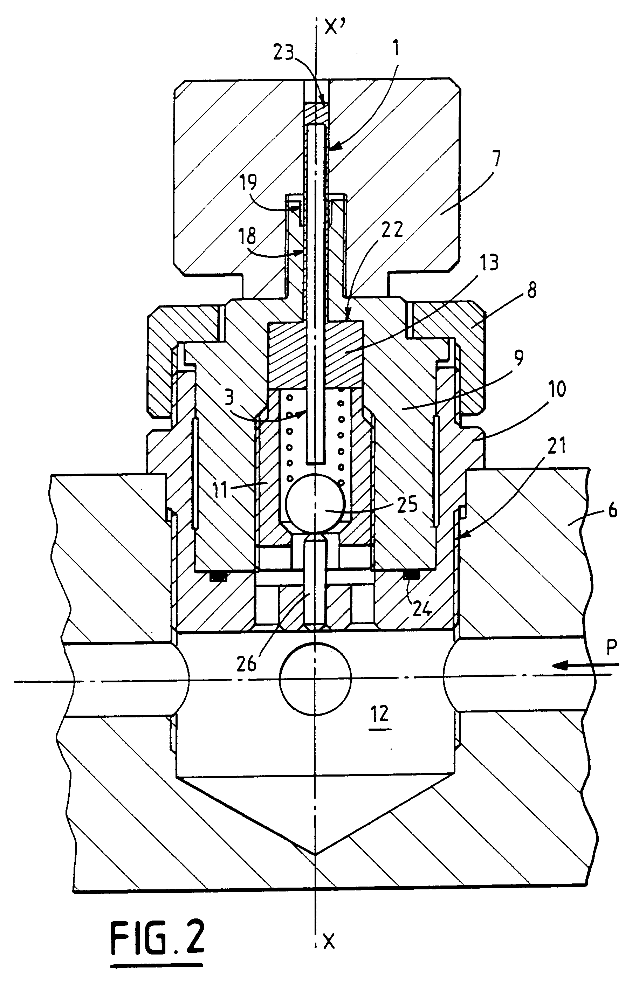

Sur les Figures 1 et 2, le dispositif suivant l'invention est représenté seul avec une seule pièce 4 mais il pourrait être dupliqué en autant d'exemplaires que nécessaire sur une même plaque de base support 6, afin de recevoir par exemple des lots de vingt ou trente pièces pouvant être disposées simultanément, et ainsi contrôler dimensionnellement celles-ci en même temps sur une machine à mesurer tridimensionnelle adaptée pour cela et dont les moyens de mesure ne faisant pas l'objet de la présente invention ne sont pas représentés.

Ladite plaque de base support 6 comporte donc au moins un orifice 18 et le dispositif suivant l'invention comporte une broche 1 ayant un volume 16 cylindrique interne creux et fermé, pouvant recevoir un fluide sous pression P par tout circuit d'alimentation 12, et réalisée en matériau expansible : l'extrémité de la broche 1 en forme de tige 15 de forme cylindrique dépasse de ladite plaque de base 6 à travers ledit orifice 18 et son embase 13 de diamètre plus large que la tige 15 est maintenu par un épaulement 22 solidaire dudit support 6 et situé en arrière dudit orifice 18.

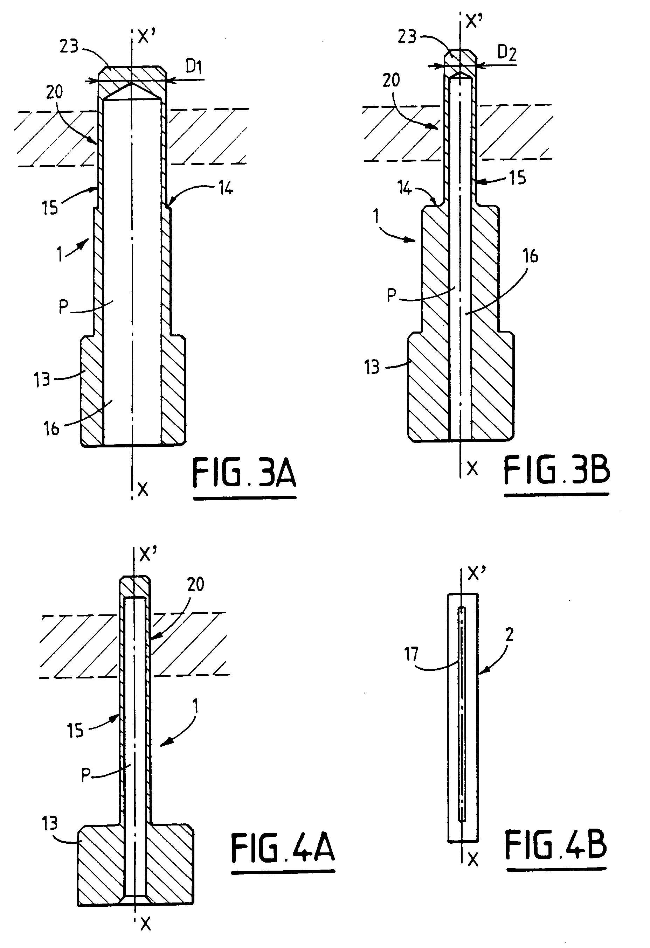

Suivant un mode de réalisation, quand ladite pièce 4 comporte un alésage 5, comme représenté sur les Figures 1 et 2, ladite tige 15 de la broche 1 est un doigt cylindrique creux fermé à son extrémité 23, tel que représenté sur les Figures 3A, 3B et 4A, et dont l'épaisseur de la paroi périphérique externe est mince au regard de son diamètre, de sa longueur et de l'épaisseur de l'extrémité 23. Essentiellement, le rapport de l'épaisseur sur le diamètre doit respecter les règles de calcul des enveloppes minces, dont les conditions sont bien connues en résistance des matériaux pour le calcul des structures de ce type répondant aux conditions de la présente invention.

La broche expansible 1 du dispositif peut être constituée d'un matériau unique choisi dans la famille des thermoplastiques tel que du polyméthacrylate de méthyle (PMMA), du polyoxyméthylène (POM) ou acétal, des polyamides bien que ces matériaux soient d'usinage délicat, des polycarbonates... En fait, le matériau choisi doit avoir des caractéristiques mécaniques respectant les critères suivants : résistance à la traction comprise entre 5 et 8 da N/mm² ; module d'élasticité entre 200 et 300 da N/mm² ; usinabilité et aptitude à être moulé. Les caractéristiques et la forme de la broche expansible 1 représentent d'un point de vue théorique le meilleur compromis entre d'une part la faculté de s'expanser sous l'effet d'une pression interne P et d'autre part la possibilité d'assurer l'interfaçage mécanique entre la pièce 4 et le support de référence 6. La broche composite permet de couvrir une plage de diamètre, même en dessous de 4 millimètres jusqu'à 2 millimètres tel que décrit ci-après et représenté spécifiquement sur les Figures 4A et 4B et en position sur les Figures 1 et 2.

Quel que soit le mode de réalisation de ladite broche 1, l'épaisseur de la paroi périphérique en matériau expansible, dans la zone utile 20 de sa partie déformable 15, en forme de doigt ou de tige, doit être parfaitement maîtrisée pour permettre une expansion homogène parfaitement symétrique autour de son axe XX': celle-ci doit en effet permettre un contact uniforme dans l'alésage 5 de la pièce 4 à maintenir et à positionner grâce à la pression P intérieure transmise dans la partie intérieure du volume creux 16 et qui peut être très élevée, de l'ordre de plusieurs centaines de bars.

Suivant la Figure 4A et sa représentation en position sur ladite Figure 2, ladite broche expansible peut comporter un seul épaulement entre la tige ou le doigt 15, et l'embase 13, qui vient s'appuyer contre l'épaulement 22 du canon 9 support de broche, la partie inférieure du doigt 15 traversant l'orifice alésage 18 pour déboucher au-dessus de celui-ci sur une hauteur permettant de traverser au moins la longueur de l'alésage 5 de la pièce 4 à maintenir ; dans un autre mode de réalisation, tel que représenté sur les Figures 3A, 3B et en position sur la Figure 1, ladite broche 1 comporte un deuxième épaulement 14 situé entre son embase 13 et la tige 15, afin de réduire la longueur du doigt 15 à paroi périphérique mince, compte tenu de la zone utile 20 de déformation par expansion radiale, homogène et uniforme devant recevoir l'alésage 5 de la pièce 4.

Dans le mode de réalisation, tel que représenté sur les Figures 4A et 4B mais ceci peut être adapté dans le mode de réalisation des Figures 3A et 3B, la broche est constituée de plusieurs éléments tels que, d'une part une enveloppe 2 cylindrique externe métallique entourant sur toute sa longueur la tige 15, ladite enveloppe 2 étant expansible radialement sur une partie de sa hauteur grâce à des rainures, fentes ou lumières 17 disposées à intervalles réguliers périphériquement le long de certaines génératrices et s'encastrant à une de ses extrémités qui est celle inférieure dans ledit orifice 18 ; cette enveloppe métallique extérieure peut comporter par exemple quatre lumières 17 disposées à 90° et au moins recouvrant la longueur de la zone utile 20 et même au-delà de façon à garantir une expansion symétrique et homogène sur la hauteur de l'alésage 5 qui doit être positionné dans cette zone utile. Cette enveloppe métallique déformable 2 permet essentiellement une reprise des efforts de flexion qui sont très importants lorsque la pièce 4 comporte un bras de levier supérieur par exemple à cinq fois le diamètre de référence de son alésage, fournit également un coefficient de frottement plus favorable au maintien en rotation de ladite pièce et enfin protège mécaniquement les parois de la partie expansible indéformable de la broche ; cette partie expansible assure par ailleurs l'étanchéité avec les pièces support de la plaque de base et la transmission de la pression P.

De plus, suivant un autre mode de réalisation, ladite broche composite peut également comporter tel que représenté sur la Figure 2, une âme métallique intérieure 3, ou mandrin ou raidisseur, ayant également des orifices ou lumières mais pour permettre ici le passage du fluide en pression et non sa déformation radiale : ledit mandrin ou âme 3 étant cylindrique et rigide est situé dans le volume interne 16 de la broche 1 et disposé au moins sur toute la hauteur de celle-ci, passant à travers et sur toute la hauteur dudit orifice 18 dans lequel il permet l'encastrement de la tige 15 de la broche et même jusqu'à dépasser de la partie inférieure de l'embase 13, ce qui permet de reprendre les efforts de flexion et de cisaillement en plus et en complément de l'enveloppe externe 2 métallique décrite précédemment.

Ainsi, dans le mode complet de réalisation de la structure de la broche sous sa forme composite avec une âme métallique interne 3, ses parois expansibles qui peuvent être en acétal 1 et l'enveloppe métallique externe assurant l'interface avec la pièce 4 à supporter et qui peut être en cuivre au berylium traité, on associe les diverses qualités de chacun des composants, à savoir : la rigidité de l'âme ou du mandrin métallique interne 3 pour la reprise des efforts de flexion ou de cisaillement transmis par la pièce 4, lors des opérations de mesure ou d'autres applications provoquant des efforts extérieurs ; l'étanchéité des parois expansibles et la fiabilité en raison de l'utilisation dans le domaine élastique de déformation ; le maintien de la géométrie de l'ensemble assurée par l'enveloppe extérieure 2 qui permet d'obtenir de fortes pressions de contact avec la pièce 4 et de la localiser sans déformation locale grâce à la rigidité de la liaison, et qui permet en raison de sa structure tubulaire de reprendre les efforts de torsion induits par les forces extérieures agissant sur la pièce, tout en permettant une expansion suffisante pour tenir compte des variations de diamètre de l'alésage 5 de la pièce 4 due aux tolérances sur les alésages, grâce aux lumières longitudinales 17.

Suivant la représentation des Figures 1 et 2 de ladite broche 1 en position de montage, le dispositif suivant l'invention comporte une pièce 9 appelée "canon", dans laquelle est réalisé ledit orifice 18, à travers lequel passe ladite tige 15 de la broche 1 ; lequel canon 9 est fixé sur ladite plaque de base support 6 et porte du côté opposé audit orifice 18 une cale Il de maintien de l'embase 13 de la broche 1 et immobilisée dans un alésage correspondant de la pièce 9 ; celle-ci est elle-même fixée, de préférence par vissage, et doit être étanche, dans un trou 21 de la plaque de base 6 à la partie inférieure duquel débouche l'alimentation hydraulique 12 d'un fluide visqueux à la pression P : cette pression est transmise à l'ensemble du volume intérieur 16 de la broche 1 par des orifices réalisés dans les différentes pièces de liaison et de fixation.

La partie supérieure externe de l'orifice 18 à travers lequel passe la tige de ladite broche expansible 1, peut comporter une partie ayant un diamètre interne plus important que celui de l'alésage 18 proprement dit : ceci constitue un décrochage externe 19 de celui-ci pour permettre à la partie inférieure de la tige déformable 15 de commencer à se déformer radialement et être alors parfaitement cylindrique et symétrique dans la zone utile 20 qui peut être alors juste au-dessus de cette partie externe 19 à l'endroit où la pièce 4 doit se positionner en venant alors en butée contre celle-ci.

Suivant la Figure 2, afin de développer un dispositif polyvalent, en particulier pour des utilisateurs de machines à mesurer tridimensionnelles, qui utilisent des plaques d'alimentation 6 permettant de recevoir des broches 1 de divers diamètres telles que celles représentées sur les Figures 3A et 3B, respectivement de diamètres D1 et D2 différents, le support fixe de celles-ci peut autoriser un changement rapide de ces broches. Pour cela, le système de localisation suivant l'invention est constitué de :
- un porte canon 10 vissé dans la plaque de base 6 qui assure l'alimentation 12 en fluide de la broche 1 et qui est elle-même alimentée par un dispositif non représenté de mise en pression P : celui-ci peut être, soit manuel à deux étages, avec une basse pression pour la localisation et l'orientation des pièces sans jeu et à haute pression contrôlée pour le maintien des pièces 4 ; soit de mise en pression automatique pour assurer un meilleur confort d'utilisation du dispositif, ce système pouvant être constitué d'une pompe hydraulique motorisée et d'une distribution de fluide à deux niveaux de pression préréglés.
- un canon 9 de broche qui est introduit dans le porte canon 10 et qui est maintenu en position par un écrou 8 moleté. L'étanchéité de la liaison est assurée par un joint torique 24 situé dans le porte canon et logé dans une gorge. Un appui plan entre les surfaces en vis à vis du canon et du porte canon assure une perte de charge dynamique pour limiter la pression appliquée sur le joint. Le canon de broche possède un clapet anti-retour 25 constitué d'une bille métallique et d'un ressort précontraint qui assure le plaquage de la bille sur son siège lorsque le canon 9 est sorti de son support 10 pour être remplacé. Une goupille mécanique fixée 26 dans le porte canon 10 assure le relevage de la bille pour assurer le passage du fluide. Le clapet décrit ci-dessus a pour objet d'éviter les pertes de fluide lors de la manipulation des broches interchangeables 1 et également d'éviter les bulles d'air dans la broche 1.
- un capuchon de protection de chacune de ces broches lors de leur manipulation constitué d'une pièce moletée 7 qui se visse sur le canon porte broche 9 et dont le diamètre intérieur constitue un ajustement glissant avec le diamètre extérieur de la broche expansible 1 pour une pression nulle. Cet ajustement évite les risques d'éclatement et de fatigue des broches sur un dispositif multibroche, lorsque celles-ci ne sont pas utilisées et qu'elles se retrouvent à l'état libre lors de la mise en pression ; il permet également de tester l'étanchéité du dispositif à haute pression sans aucun risque pour les broches. Il assure enfin la protection mécanique de celles-ci lors de la manipulation du dispositif ou lors de son stockage.

La pression P d'utilisation du dispositif peut être supérieure à la pression d'éclatement des broches à l'état libre en raison de la présence notamment des pièces métalliques externes 2, qui limitent l'expansion des broches 1. Cette caractéristique du produit permet en particulier d'augmenter à souhait la pression de contact des broches 1 avec les pièces 4 lorsque les efforts appliqués sur ces pièces risquent d'entraîner une rotation de celles-ci.

## Revendications

1. Procédé de maintien et de positionnement d'au moins une pièce mécanique (4) comportant au moins un alésage (5) ou un arbre de section cylindrique, sur une plaque de base support (6) comportant au moins un orifice (18), dans lequel est disposée une broche (1) ayant un volume (16) cylindrique intérieur creux et fermé, avec une embase (13) de diamètre plus large que son extrémité en forme de tige (15) expansible, maintenue par un épaulement (22) solidaire dudit support (6), et située en arrière dudit orifice (18), laquelle extrémité de ladite broche en forme de tige (15) cylindrique est associée à une enveloppe cylindrique (2) métallique comportant des rainures (17) disposées le long de certaines génératrices et pouvant coopérer avec l'alésage (5) ou l'arbre de la pièce (4), et dépasse de ladite plaque de base (6) à travers ledit orifice (18), tel qu'on enfile ladite tige (15) à l'intérieur de l'alésage (5) ou autour de l'arbre de la pièce (4) à maintenir, qu'on envoie un fluide sous pression P dans ledit volume creux (16) interne de ladite broche (1) , et qu'on déforme ainsi par expansion radiale et la tige (15) de la broche et son enveloppe (2), immobilisant ladite pièce mécanique (4), caractérisé en ce que :
- on réalise ladite tige expansible de la broche (1) en matériau dont les caractéristiques mécaniques sont telles que la résistance à la traction est comprise entre 5 et 8 da N/mm², le module d'élasticité entre 200 et 300 da N/mm² avec une usinabilité et une aptitude à être moulé,
- on encastre une des extrémités de l'enveloppe (2) cylindrique dans ledit orifice (18),
- lorsqu'on déforme ladite tige (15), on expanse ladite enveloppe (2) dont la surface vient en contact, coopère uniformément et devient solidaire avec l'alésage (5) ou l'arbre de la pièce (4) d'une manière homogène en s'adaptant aux variations de dimensions de celle-ci,
- on maintient une pression P suffisante dans ladite broche (1) et on constitue une liaison rigide assurant le maintien de ladite pièce (4) sur le support (6) et son positionnement par rapport audit orifice (18) en respectant la géométrie de la pièce (4).

2. Dispositif de maintien et de positionnement, sur une plaque de base support (6) comportant au moins un orifice (18), d'au moins une pièce mécanique (4) comportant au moins un alésage (5) ou un arbre de section cylindrique, lequel dispositif comporte une broche (1) ayant un volume (16) cylindrique interne creux et fermé, pouvant recevoir un fluide sous pression, et dont l'extrémité en forme de tige (15) de forme cylindrique dépasse de ladite plaque de base (6) à travers ledit orifice (18), et est réalisée en matériau expansible, et dont l'embase (13) de diamètre plus large que la tige (15) est maintenue par un épaulement (22) solidaire dudit support (6) et situé en arrière dudit orifice (18) laquelle extrémité de la broche est entourée d'une enveloppe (2) cylindrique métallique expansible radialement sur une partie au moins de sa hauteur, grâce à des rainures (17) disposées le long de certaines génératrices, caractérisé en ce que une des extrémités de l'enveloppe (2) cylindrique est encastrée dans ledit orifice (18), et le matériau expansible de la tige de la broche (1) est un matériau dont les caractéristiques mécaniques sont telles que la résistance à la traction est comprise entre 5 et 8 da N/mm², le module d'élasticité entre 200 et 300 da N/mm² avec une usinabilité et une aptitude à être moulé.

3. Dispositif de maintien et de positionnement suivant la revendication 2 et pour une pièce mécanique (4) comportant au moins un alésage (5), caractérisé en ce que ladite tige (15) de la broche (1) est un doigt cylindrique creux fermé à son extrémité (23), dont l'épaisseur de la paroi périphérique externe est mince au regard de son diamètre, de sa longueur et de l'épaisseur de l'extrémité (23).

4. Dispositif suivant la revendication 3, caractérisé en ce l'enveloppe (2) cylindrique métallique est extérieure et entoure sur toute sa longueur la tige (15).

5. Dispositif de maintien et de positionnement suivant l'une quelconque des revendications 3 ou 4, caractérisé en ce qu'il comporte un mandrin (3) cylindrique rigide situé dans le volume interne (16) de la broche (1) et disposé au moins sur toute la hauteur de celle-ci.

6. Dispositif de maintien et de positionnement suivant la revendication 2 et pour une pièce mécanique (4) comportant au moins un arbre de section cylindrique, caractérisé en ce que ladite tige (15) de la broche (1) est un cylindre creux ouvert à son extrémité (23), formant alésage, et dont le volume (16) cylindrique interne fermé est disposé en couronne autour de cet alésage, l'épaisseur de la membrane périphérique interne dudit cylindre étant mince.

7. Dispositif suivant la revendication 6, caractérisé en ce qu'il comporte un mandrin (3) cylindrique rigide disposé extérieurement sur toute la longueur de ladite tige (15) et s'encastrant à une de ses extrémités dans ledit orifice (18).

8. Dispositif suivant l'une quelconque des revendications 6 ou 7, caractérisé en ce que ladite enveloppe métallique (2) est interne, située dans ledit alésage de la tige (15).

9. Dispositif de maintien et de positionnement suivant l'une quelconque des revendications 2 à 8, caractérisé en ce que ladite broche (1) comporte un deuxième épaulement (14) situé entre son embase (13) et sa tige (15).

10. Dispositif suivant l'une quelconque des revendications 2 à 9, caractérisé en ce qu'il comporte une pièce (9) appelée "canon" dans laquelle est réalisé ledit orifice (18), à travers lequel passe ladite tige (15) de la broche (1), lequel canon (9) est fixé sur ladite plaque de base support (6) et qui porte du côté opposé audit orifice (18) une cale (11) de maintien de l'embase (13) de la broche (1), et immobilisée dans un alésage correspondant de la pièce (9).

## Claims

1. Method for holding and positioning at least one mechanical part (4) comprising at least one bore (5) or a shaft of cylindrical section, on a supporting base plate (6) comprising at least one opening (18), in which is disposed a spindle (1) having a sealed hollow inner cylindrical space (16), with a base (13) of diameter wider than its end in the form of an expandable rod (15), held by a shoulder (22) fast with said support (6), and located to the rear of said opening (18), which end of said spindle in the form of a cylindrical rod (15) is associated with a metallic cylindrical envelope (2) comprising grooves (17) disposed along certain generatrices and adapted to cooperate with the bore (5) or the shaft of the part (4), and projects beyond said base plate (6) through said opening (18), such that said rod (15) is fitted inside the bore (5) or around the shaft of the part (4) to be held, that a fluid under pressure P is sent into said inner hollow space (16) of said spindle (1), and the rod (15) of the spindle and its envelope (2) are thus deformed by radial expansion, immobilizing said mechanical part (4), characterized in that:
- sad expandable rod of the spindle (1) is made of material whose mechanical characteristics are such that the tensile strength is included between 5 and 8 da N/mm², the modulus of elasticity between 200 and 300 da N/mm² with a machinability and an aptitude to be moulded,
- one end of the cylindrical envelope (2) is fitted in said opening (18),
- when said rod (15) is deformed, said envelope (2) is expanded, whose surface comes into contact, cooperates uniformly and becomes fast with the bore (5) or the shaft of the part (4) in homogeneous manner by adapting to variations in dimensions thereof,
- a sufficient pressure P is maintained in said spindle (1) and a rigid connection is constituted, ensuring hold of sad part (4) on the support (6) and its positioning with respect to said opening (18) by respecting the geometry of the part (4).

2. Device for holding and positioning, on a supporting base plate (6) comprising at least one opening (18), at least one mechanical part (4) comprising at least one bore (5) or a shaft of cylindrical section, which device comprises a spindle (1) having a sealed hollow inner cylindrical space (16), which may receive a fluid under pressure, and whose end in the form of a rod (15) of cylindrical shape projects beyond said base plate (6) through said opening (18), and is made of expandable material, and whose base (13) of wider diameter than the rod (15) is maintained by a shoulder (22) fast with said support (6) and located to the rear of said opening (18), which end of the spindle is surrounded by a metallic cylindrical envelope (2) radially expandable over at least a part of its height, thanks to grooves (17) disposed along certain generatrices, characterised in that one of the ends of the cylindrical envelope (2) is fitted in said opening (18), and the expandable material of the rod of the spindle (1) is a material whose mechanical characteristics are such that the tensile strength is included between 5 and 8 da N/mm², the modulus of elasticity between 200 and 300 da N/mm² with a machinability and an aptitude of being moulded.

3. Holding and positioning device according to Claim 2 and for a mechanical part (4) comprising at least one bore (5), characterized in that said rod (15) of the spindle (1) is a hollow cylindrical finger closed at its end (23), of which the thickness of the outer peripheral wall is thin in comparison with its diameter, its length and the thickness of the end (23).

4. Device according to Claim 3, characterized in that the metallic cylindrical envelope (2) is outside and surrounds the rod (15) over the whole of its length.

5. Holding and positioning device according to either one of Claims 3 or 4, characterized in that it comprises a rigid cylindrical mandrel (3) located in the inner volume (16) of the spindle (1) and disposed at least over the whole height thereof.

6. Holding and positioning device according to Claim 2 and for a mechanical part (4) comprising at least one shaft of cylindrical section, characterized in that said rod (15) of the spindle (1) is a hollow cylinder open at its end (23), forming bore, and whose sealed inner cylindrical space (16) is disposed in a ring around this bore, the thickness of the inner peripheral membrane of said cylinder being thin.

7. Device according to Claim 6, characterized in that it comprises a rigid cylindrical mandrel (3) disposed outside over the whole length of said rod (15) and fitting at one of its ends in said opening (18).

8. Device according to either one of Claims 6 or 7, characterized in that said metallic envelope (2) is internal, located in said bore of the rod (15).

9. Holding and positioning device according to any one of Claims 2 to 8, characterized in that said spindle (1) comprises a second shoulder (14) located between its base (13) and its rod (15).

10. Device according to any one of Claims 2 to 9, characterized in that it comprises a part (9) called "barrel" in which said opening (18) is made, through which said rod (15) of the spindle (1) passes, which barrel (9) is fixed on said supporting base plate (6) and which bears opposite said opening (18) a shim (11) for holding the base (13) of the spindle (1), and immobilized in a corresponding bore of the part (9).

## Patentansprüche

1. Verfahren zum Halten und genauen Ausrichten wenigstens eines mechanischen Werkstücks (4) mit wenigstens einer Bohrung (5) oder einer Welle zylindrischen Querschnitts, auf einer Haltegrundplatte (6) mit wenigstens einer Öffnung (18), in der ein Zapfen (1) mit einem hohlen und geschlossenen zylindrischen inneren Volumen (16) angeordnet ist, der einen Ansatz (13) mit einem größeren Durchmesser als sein Ende in Form einer aufweitbaren Stange (15) aufweist, der durch eine mit dem genannten Halter (6) festverbundenen Schulter (22) gehalten und hinter der genannten Öffnung (18) angeordnet ist, wobei das Ende des genannten Zapfens in Form der zylindrischen Stange (15) mit einer zylindrischen metallischen Hülle (2) verbunden ist, die entlang bestimmter Mantellinien Rillen (17) aufweist und mit der Bohrung (5) oder der Welle des Werkstücks (4) zusammenwirkt, und die genannte Grundplatte (6) durch die genannte Öffnung (18) derart überragt, daß man die genannte Stange (15) in das Innere der Bohrung (5) oder um die Welle des zu haltenden Werkstücks (4) auffädelt, man ein Fluid unter Druck P in das genannte hohle Volumen (16) innerhalb des genannten Zapfens (1) einbringt, und man daher durch radiales Aufweiten die Stange (15) des Zapfens und seine Hülle (2) verformt, wobei man das genannte mechanische Werkstück (4) festsetzt, dadurch gekennzeichnet, daß:
- man die genannte aufweitbare Stange des Zapfens (1) aus Material herstellt, dessen mechanische Eigenschaften derart sind, daß die Zugfestigkeit zwischen 5 und 8 da N/mm² ist, der Elastizitätsmodul zwischen 200 und 300 da N/mm² ist, es maschinell bearbeitbar und zum Gießen geeignet ist,
- man eines der Enden der zylindrischen Hülle (2) in die genannte Öffnung (18) einlaßt,
- wenn man die genannte Stange (15) verformt, man die genannte Hülle (2) aufweitet, deren Oberfläche in homogener Weise fest mit der Bohrung (5) oder der Welle des Werkstücks (4) in Berührung kommt, gleichmäßig damit zusammenwirkt und verbunden wird, indem sie sich an deren Maßabweichungen anpaßt,
- man im genannten Zapfen (1) einen ausreichenden Druck P hält und man eine starre Verbindung herstellt, die das Halten des genannten Werkstücks (4) auf dem Kalter (6) und sein genaues Ausrichten in Bezug auf die genannte Öffnung (18) unter Beachtung der Geometrie des Werkstücks (4)sicherstellt.

2. Vorrichtung zum Halten und genauen Ausrichten wenigstens eines mechanischen Werkstücks (4) mit wenigstens einer Bohrung (5) oder einer Welle zylindrischen Querschnitts, auf einer Haltegrundplatte (6) mit wenigstens einer Öffnung (18), wobei die Vorrichtung einen Zapfen (1) mit einem zylindrischen hohlen und geschlossenen inneren Volumen (16) aufweist, das ein unter Druck stehendes Fluid aufnehmen kann, und dessen Ende in Form einer zylindrischen Stange (15) über die genannte Grundplatte (6) hinaus durch die genannte Öffnung (18) ragt, und der aus einem aufweitbaren Material hergestellt ist, und bei dem der Ansatz (13) mit größerem Durchmesser als die Stange (15) durch eine mit dem genannten Kalter (6) festverbundenen Schulter (22) gehalten und hinter dar genannten Öffnung (18) angeordnet ist, wobei das Ende des Zapfens von einer zylindrischen metallischen Hülle (2) umschlossen ist, die an wenigstens einem Teil ihrer Höhe aufgrund Rillen (17) entlang bestimmter Mantellinien radial aufweitbar ist, dadurch gekennzeichnet, daß eines der Enden der zylindrischen Hülle (2) in die genannte Öffnung (18) eingelassen ist, und das aufweitbare Material der Stange des Zapfens (1) ein Material ist, dessen mechanische Eigenschaften derart sind, daß die Zugfestigkeit zwischen 5 und 8 da N/mm² ist, der Elastizitätsmodul zwischen 200 und 300 da N/mm² ist, es maschinell bearbeitbar und zum Gießen geeignet ist.

3. Vorrichtung zum Halten und genauen Ausrichten nach Anspruch 2 und für ein mechanisches Werkstück (4) mit wenigstens einer Bohrung (5), dadurch gekennzeichnet, daß die genannte Stange (15) des Zapfens (1) ein hohler am Ende (23) geschlossener zylindrischer Finger ist, dessen Dicke der äußeren Umfangswand im Vergleich zu seinem Durchmesser, seiner Länge Und Dicke des Endes (23) gering ist.

4. Vorrichtung nach Anspruch 3, dadurch gekennzeichnet, daß die metallische zylindrische Hülle (2) außen auf deren gesamter Lange angeordnet ist und die Stange (15) umschließt.

5. Vorrichtung zum Halten und genauen Ausrichten nach einem der Ansprüche 3 oder 4, dadurch gekennzeichnet, daß sie einen starren zylindrischen Dorn (3) aufweist, der im inneren Volumen (16) des Zapfens (1) angeordnet und Über wenigstens dessen gesamte Höhe angeordnet ist.

6. Vorrichtung zum Halten und genauen Ausrichten nach Anspruch 2 und für ein mechanisches Werkstück (4) mit wenigstens einer Welle zylindrischen Querschnitts, dadurch gekennzeichnet, daß die genannte Stange (15) des Zapfens (1) ein hohler, an seinem Ende (23) offener Zylinder ist, der eine Bohrung bildet, und dessen zylindrisches geschlossenes inneres Volumen (16) rings um die Bohrung angeordnet ist, wobei die Dicke der inneren Umfangsmembran des Zylinders gering ist.

7. Vorrichtung nach Anspruch 6, dadurch gekennzeichnet, daß sie einen starren zylindrischen Dorn (3) aufweist, der außen über die gesamte Länge der genannten Stange (15) angeordnet ist und mit einem seiner Enden in die genannte Öffnung (18) eingelassen ist.

8. Vorrichtung nach einem der Ansprüche 6 oder 7, dadurch gekennzeichnet, daß die metallische Hülle (2) innen in der genannten Bohrung der Stange (15) angeordnet ist.

9. Vorrichtung zum Kalten und genauen Ausrichten nach einem der Ansprüche 2 bis 8, dadurch gekennzeichnet, daß der genannte Zapfen (1) eine zweite Schulter (14) aufweist, die zwischen seinem Ansatz (13) und seiner Stange (15) angeordnet ist.

10. Vorrichtung nach einem der Ansprüche 2 bis 9, dadurch gekennzeichnet, daß sie ein als "Geschütz" beseichnetes Teil (9) aufweist, in dem die genannte Öffnung (18) ausgebildet ist, durch die sich die genannte Stange (15) des Zapfens (1) erstreckt, wobei das Geschütz (9) auf der genannten Haltegrundplatte (6) fest ist und das an der der Öffnung (18) entgegengesetzten Seite ein in einer zugehörigen Bohrung des Teils (9) festgesetztes Unterlageteil (11) zum Halten des Ansatzes (13) des Zapfens (1) trägt.
